# EUROPEAN PATENT SPECIFICATION

(11) **EP 4 595 577 B1**
(45) Date of publication and mention of the grant of the patent: **30.09.2026**
(21) Application number: 22826404.0
(22) Date of filing: 26.09.2022
(51) Int. Cl.: H04W 48/12, H04W 48/14, H04W 48/20, H04W 74/00, H04W 74/08

(54) **APPARATUS AND METHOD OF WIRELESS COMMUNICATION**
VORRICHTUNG UND VERFAHREN ZUR DRAHTLOSEN KOMMUNIKATION
APPAREIL ET PROCÉDÉ DE COMMUNICATION SANS FIL

(43) Date of publication of application: 06.08.2025
(73) Proprietor: GUANGDONG OPPO MOBILE TELECOMMUNICATIONS CORP., LTD., Dongguan, Guangdong 523860 (CN)
(72) Inventor: LIN, Hao, 92200 Neuilly-sur-Seine (FR)
(74) Representative: Mewburn Ellis LLP
(86) International application number: PCT/IB2022/000613
(87) International publication number: WO 2024/069207

(56) References cited:
- EP-A1- 3 897 049
- WO-A1-2022/159490
- US-A1- 2019 313 260
- US-A1- 2021 298 090

## Description

### BACKGROUND OF DISCLOSURE

### 1. Field of the Disclosure

The present disclosure relates to the field of communication systems, and more particularly, to an apparatus and a method of wireless communication, which can provide a good communication performance and/or high reliability.

### 2. Description of the Related Art

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as long term evolution (LTE) systems, LTE-advanced (LTE-A) systems, or LTE-A pro systems, and fifth generation (5G) systems which may be referred to as new radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include a number of base stations or network access nodes, each simultaneously supporting communication for multiple communication devices, which may be otherwise known as user equipment (UE).

In a legacy new radio (NR) system, a base station such as a gNB periodically transmits a synchronization signal block (SSB) in the system as well as a system information block type 1 (SIB1) system information. This may increase a network power consumption. Therefore, there is a need for an apparatus (such as a UE and/or a base station) and a method of wireless communication, which can reduce the network power consumption.

US 2019/313260 A1 provides wireless communications systems and methods related to on-demand cell coverage extension for broadcast signals. A first wireless communication device communicates, with a second wireless communication device, a first extended cell coverage request. The first wireless communication device communicates, with the second wireless communication device, a first broadcast communication signal in an extended cell coverage mode in response to the first extended cell coverage request. The first broadcast communication signal includes a system information block repeated in at least one of a time domain or a frequency domain.

US 2021/298090 A1 provides a method for transmitting a random access channel (RACH) by a terminal in a wireless communication system. The method comprises: receiving a synchronization signal block (SSB) from a base station; receiving a downlink signal from the base station; and when the reception of the downlink signal is finished, transmitting the RACH to the base station, wherein the SSB is periodically transmitted in every Nth fixed frame period (FFP), N is an integer equal to or greater than 1, and the starting time point for transmission of the SSB corresponds to a first time resource included in the every Nth FFP.

EP 3897049 A1 provides a method for receiving a synchronization signal/physical broadcast channel (SS/PBCH) block by a terminal in an unlicensed band. Particularly, the method may comprise: receiving an SS/PBCH block including an SS and a PBCH; detecting an index of a demodulation reference signal (DMRS) sequence for the PBCH; and on the basis of the index of the DRMS sequence, acquiring information relating to a time when an index of the SS/PBCH block and the SS/PBCH block are received, wherein the number of indices of the SS/PBCH block is smaller than or equal to the number of indices of the DMRS sequence, and the indices of the SS/PBCH block are cyclically mapped to the indices of the DMRS sequence

WO 2022/159490 A1 provides a wireless device which initiates a small data transmissions (SDT) procedure in a non-connected state. During the SDT procedure, a first uplink signal is transmitted based on a first transmission power. The first transmission power is determined based on: an initial value of a first power control adjustment state, and one or more transmit power control command values received based on the initiating.

### SUMMARY

An object of the present disclosure is to propose an apparatus (such as a user equipment (UE) and/or a base station) and a method of wireless communication, which can reduce a network power consumption, allow the base station to avoid transmitting a synchronization signal block (SSB) and/or a system information periodically, provide a good communication performance, and/or provide a high reliability. The invention is set out in the appended set of claims.

In a first aspect of the present disclosure, a method of wireless communication by a UE includes detecting, by the UE, a first signal transmitted by a base station, wherein the first signal is used for the UE to determine a cell for accessing; and/or transmitting, by the UE, a second signal to the base station before performing a random access channel (RACH) procedure.

In some embodiments of the above method according to the first aspect of the present disclosure, if the UE intends to access to the cell of the base station, the second signal is used for the base station to assume that there is a need for transmitting a synchronization signal block (SSB) and/or a system information.

In some embodiments of any one of the above methods according to the first aspect of the present disclosure, the method further includes assuming, by the UE, that the UE is configured to receive from the base station the SSB and/or the system information after the UE transmitting the second signal. Optionally, the system information includes a system information block type 1 (SIB1) system information.

In some embodiments of any one of the above methods according to the first aspect of the present disclosure, the first signal is transmitted by the base station with a first periodicity, and the SSB and/or the system information is transmitted by the base station with a second periodicity, and the first periodicity is less than or equal to the second periodicity.

In some embodiments of any one of the above methods according to the first aspect of the present disclosure, the first signal includes a first reference signal and/or a second reference signal.

In some embodiments of any one of the above methods according to the first aspect of the present disclosure, the first reference signal corresponds to a first index, and/or the second reference signal corresponds to a second index.

In some embodiments of any one of the above methods according to the first aspect of the present disclosure, the first reference signal and the second reference signal are not overlapped in time domain.

In some embodiments of any one of the above methods according to the first aspect of the present disclosure, the first index is relevant to a first SSB index, and/or the second index is relevant to a second SSB index.

In some embodiments of any one of the above methods according to the first aspect of the present disclosure, the first reference signal is quasi-co-located (QCL'ed) with an SSB associated with the first SSB index, and/or the second reference signal is QCL'ed with an SSB associated with the second SSB index.

In some embodiments of any one of the above methods according to the first aspect of the present disclosure, the first reference signal and/or the second reference signal corresponds to a first index, and the first index is relevant to a first SSB index.

In some embodiments of any one of the above methods according to the first aspect of the present disclosure, the first reference signal and/or the second reference signal is QCL'ed with an SSB associated with the first SSB index.

In some embodiments of any one of the above methods according to the first aspect of the present disclosure, the first reference signal corresponds to a first index and a second index, the first index is relevant to a first SSB index, and the second index is relevant to a second SSB index; and/or the second reference signal corresponds to a third index and a fourth index, the third index is relevant to a third SSB index, and the fourth index is relevant to a fourth SSB index.

In some embodiments of any one of the above methods according to the first aspect of the present disclosure, the first reference signal is QCL'ed with SSBs associated with the first SSB index and the second SSB index, and the second reference signal is QCL'ed with SSBs associated with the third SSB index and the fourth SSB index.

In some embodiments of any one of the above methods according to the first aspect of the present disclosure, the first reference signal and/or the second reference signal includes one or more symbols, and the one or more symbols includes a first symbol and/or a second symbol.

In some embodiments of any one of the above methods according to the first aspect of the present disclosure, the first symbol of the first reference signal and/or the second reference signal has a pre-defined location.

In some embodiments of any one of the above methods according to the first aspect of the present disclosure, the pre-defined location is relevant to a primary synchronization signal (PSS) location of an SSB.

In some embodiments of any one of the above methods according to the first aspect of the present disclosure, a location of the first symbol of the first reference signal is the same as the PSS location of the SSB of the first SSB index.

In some embodiments of any one of the above methods according to the first aspect of the present disclosure, a location of the first symbol of the second reference signal is the same as the PSS location of the SSB of the second SSB index.

In some embodiments of any one of the above methods according to the first aspect of the present disclosure, the location of the second symbol is relevant to the location of the first symbol.

In some embodiments of any one of the above methods according to the first aspect of the present disclosure, the first symbol and the second symbol are consecutive in time domain or non-consecutive in time domain.

In some embodiments of any one of the above methods according to the first aspect of the present disclosure, the first symbol and/or the second symbol includes a PSS.

In some embodiments of any one of the above methods according to the first aspect of the present disclosure, one of the first symbol and the second symbol includes a first sequence, and the other of the first symbol and the second symbol includes a second sequence.

In some embodiments of any one of the above methods according to the first aspect of the present disclosure, the first sequence or the second sequence includes a PSS or a secondary synchronization signal (SSS).

In some embodiments of any one of the above methods according to the first aspect of the present disclosure, the first sequence or the second sequence is selected from a set of candidate sequences.

In some embodiments of any one of the above methods according to the first aspect of the present disclosure, resource blocks (RBs) of a bandwidth of the first sequence and the second sequence in frequency domain are aligned.

In some embodiments of any one of the above methods according to the first aspect of the present disclosure, an index of the first reference signal or the second reference signal is determined based on the second sequence.

In some embodiments of any one of the above methods according to the first aspect of the present disclosure, a sequence of the set of candidate sequences is associated with an index.

In some embodiments of any one of the above methods according to the first aspect of the present disclosure, the second sequence of the first reference signal is different from the second sequence of the second reference signal.

In some embodiments of any one of the above methods according to the first aspect of the present disclosure, a location of the second signal is determined based on the first signal or the index of the first signal, or the location of the second signal is pre-defined.

In some embodiments of any one of the above methods according to the first aspect of the present disclosure, the location of the second signal is next to a location of the first signal.

In some embodiments of any one of the above methods according to the first aspect of the present disclosure, the location of the second signal is shifted from the location of the first signal by an offset.

In some embodiments of any one of the above methods according to the first aspect of the present disclosure, the offset is known to the UE, or the offset is pre-defined.

In some embodiments of any one of the above methods according to the first aspect of the present disclosure, a resource of the second signal is overlapped or partially overlapped with an SSB symbol location in time domain.

In some embodiments of any one of the above methods according to the first aspect of the present disclosure, when the UE transmits the second signal, the UE assumes a value for N_{TA, offset} of a timing advance offset for the cell of the base station.

In some embodiments of any one of the above methods according to the first aspect of the present disclosure, N_{TA} is equal to 0, and/or N_{offset} is pre-defined.

In some embodiments of any one of the above methods according to the first aspect of the present disclosure, the value of N_{TA, offset} is determined based on the first symbol and/or the second symbol of the first signal.

In some embodiments of any one of the above methods according to the first aspect of the present disclosure, a first resource of the second signal is associated with the first reference signal, and a second resource of the second signal is associated with the second reference signal.

In some embodiments of any one of the above methods according to the first aspect of the present disclosure, when the UE detects the first reference signal and intends to send the second signal, the UE transmits the second signal in the first resource.

In some embodiments of any one of the above methods according to the first aspect of the present disclosure, when the UE detects the second reference signal and intends to send the second signal, the UE transmits the second signal in the second resource.

In some embodiments of any one of the above methods according to the first aspect of the present disclosure, after the UE transmits the second signal, the UE assumes that the base station transmits the SSB and/or the system information in a time interval, where a start location of the time interval is relevant to a transmitted second signal location or a detected first reference signal location.

In some embodiments of any one of the above methods according to the first aspect of the present disclosure, the time interval starts from the next 5 ms half frame after the transmitted second signal.

In some embodiments of any one of the above methods according to the first aspect of the present disclosure, a duration of the time interval is multiple of 5 ms.

In some embodiments of any one of the above methods according to the first aspect of the present disclosure, after the UE transmits the second signal, the UE starts a window/timer for receiving the SSB and/or the system information transmitted by the base station.

In some embodiments of any one of the above methods according to the first aspect of the present disclosure, if the UE does not receive the SSB and/or the system information transmitted by the base station in the window/timer, the UE retransmits the second signal or restarts the window/timer.

In some embodiments of any one of the above methods according to the first aspect of the present disclosure, after the UE transmits the second signal or the UE transmits the second signal plus a delay, the UE expects to receive the SSB and/or the system information transmitted by the base station.

In some embodiments of any one of the above methods according to the first aspect of the present disclosure, the delay is pre-defined, 5 ms, or multiple of 5 ms.

In a second aspect of the present disclosure, a method of wireless communication by a base station includes transmitting, by the base station, a first signal to a user equipment (UE), wherein the first signal is used for the UE to determine a cell for accessing; and/or detecting, by the base station, a second signal transmitted by the UE before controlling the UE to perform a random access channel (RACH) procedure.

In some embodiments of the above method according to the second aspect of the present disclosure, the second signal is used for the base station to assume that there is a need for transmitting a synchronization signal block (SSB) and/or a system information.

In some embodiments of any one of the above methods according to the second aspect of the present disclosure, the method further includes transmitting, by the base station, the SSB and/or the system information to the UE after the base station detecting the second signal. Optionally, the system information includes a system information block type 1 (SIB1) system information.

In some embodiments of any one of the above methods according to the second aspect of the present disclosure, the first signal is transmitted by the base station with a first periodicity, and the SSB and/or the system information is transmitted by the base station with a second periodicity, and the first periodicity is less than or equal to the second periodicity.

In some embodiments of any one of the above methods according to the second aspect of the present disclosure, the first signal includes a first reference signal and/or a second reference signal.

In some embodiments of any one of the above methods according to the second aspect of the present disclosure, the first reference signal corresponds to a first index, and/or the second reference signal corresponds to a second index.

In some embodiments of any one of the above methods according to the second aspect of the present disclosure, the first reference signal and the second reference signal are not overlapped in time domain.

In some embodiments of any one of the above methods according to the second aspect of the present disclosure, the first index is relevant to a first SSB index, and/or the second index is relevant to a second SSB index.

In some embodiments of any one of the above methods according to the second aspect of the present disclosure, the first reference signal is quasi-co-located (QCL'ed) with an SSB associated with the first SSB index, and/or the second reference signal is QCL'ed with an SSB associated with the second SSB index.

In some embodiments of any one of the above methods according to the second aspect of the present disclosure, the first reference signal and/or the second reference signal corresponds to a first index, and the first index is relevant to a first SSB index.

In some embodiments of any one of the above methods according to the second aspect of the present disclosure, the first reference signal and/or the second reference signal is QCL'ed with an SSB associated with the first SSB index.

In some embodiments of any one of the above methods according to the second aspect of the present disclosure, the first reference signal corresponds to a first index and a second index, the first index is relevant to a first SSB index, and the second index is relevant to a second SSB index; and/or the second reference signal corresponds to a third index and a fourth index, the third index is relevant to a third SSB index, and the fourth index is relevant to a fourth SSB index.

In some embodiments of any one of the above methods according to the second aspect of the present disclosure, the first reference signal is QCL'ed with SSBs associated with the first SSB index and the second SSB index, and the second reference signal is QCL'ed with SSBs associated with the third SSB index and the fourth SSB index.

In some embodiments of any one of the above methods according to the second aspect of the present disclosure, the first reference signal and/or the second reference signal includes one or more symbols, and the one or more symbols includes a first symbol and/or a second symbol.

In some embodiments of any one of the above methods according to the second aspect of the present disclosure, the first symbol of the first reference signal and/or the second reference signal has a pre-defined location.

In some embodiments of any one of the above methods according to the second aspect of the present disclosure, the pre-defined location is relevant to a primary synchronization signal (PSS) location of an SSB.

In some embodiments of any one of the above methods according to the second aspect of the present disclosure, a location of the first symbol of the first reference signal is the same as the PSS location of the SSB of the first SSB index.

In some embodiments of any one of the above methods according to the second aspect of the present disclosure, a location of the first symbol of the second reference signal is the same as the PSS location of the SSB of the second SSB index.

In some embodiments of any one of the above methods according to the second aspect of the present disclosure, the location of the second symbol is relevant to the location of the first symbol.

In some embodiments of any one of the above methods according to the second aspect of the present disclosure, the first symbol and the second symbol are consecutive in time domain or non-consecutive in time domain.

In some embodiments of any one of the above methods according to the second aspect of the present disclosure, the first symbol and/or the second symbol includes a PSS.

In some embodiments of any one of the above methods according to the second aspect of the present disclosure, one of the first symbol and the second symbol includes a first sequence, and the other of the first symbol and the second symbol includes a second sequence.

In some embodiments of any one of the above methods according to the second aspect of the present disclosure, the first sequence or the second sequence includes a PSS or a secondary synchronization signal (SSS).

In some embodiments of any one of the above methods according to the second aspect of the present disclosure, the first sequence or the second sequence is selected from a set of candidate sequences.

In some embodiments of any one of the above methods according to the second aspect of the present disclosure, resource blocks (RBs) of a bandwidth of the first sequence and the second sequence in frequency domain are aligned.

In some embodiments of any one of the above methods according to the second aspect of the present disclosure, an index of the first reference signal or the second reference signal is determined based on the second sequence.

In some embodiments of any one of the above methods according to the second aspect of the present disclosure, a sequence of the set of candidate sequences is associated with an index.

In some embodiments of any one of the above methods according to the second aspect of the present disclosure, the second sequence of the first reference signal is different from the second sequence of the second reference signal.

In some embodiments of any one of the above methods according to the second aspect of the present disclosure, a location of the second signal is determined based on the first signal or the index of the first signal, or the location of the second signal is pre-defined.

In some embodiments of any one of the above methods according to the second aspect of the present disclosure, the location of the second signal is next to a location of the first signal.

In some embodiments of any one of the above methods according to the second aspect of the present disclosure, the location of the second signal is shifted from the location of the first signal by an offset.

In some embodiments of any one of the above methods according to the second aspect of the present disclosure, the offset is known to the UE, or the offset is pre-defined.

In some embodiments of any one of the above methods according to the second aspect of the present disclosure, a resource of the second signal is overlapped or partially overlapped with an SSB symbol location in time domain.

In some embodiments of any one of the above methods according to the second aspect of the present disclosure, when the UE transmits the second signal, the UE assumes a value for N_{TA, offset} of a timing advance offset for the cell of the base station.

In some embodiments of any one of the above methods according to the second aspect of the present disclosure, N_{TA} is equal to 0, and/or N_{offset} is pre-defined.

In some embodiments of any one of the above methods according to the second aspect of the present disclosure, the value of N_{TA, offset} is determined based on the first symbol and/or the second symbol of the first signal.

In some embodiments of any one of the above methods according to the second aspect of the present disclosure, a first resource of the second signal is associated with the first reference signal, and a second resource of the second signal is associated with the second reference signal.

In some embodiments of any one of the above methods according to the second aspect of the present disclosure, after the base station transmits the first reference signal to the UE, the base station receives the second signal in the first resource.

In some embodiments of any one of the above methods according to the second aspect of the present disclosure, after the base station transmits the second reference signal to the UE, the base station receives the second signal in the second resource.

In some embodiments of any one of the above methods according to the second aspect of the present disclosure, after the base station detects the second signal, the base station transmits the SSB and/or the system information in a time interval, where a start location of the time interval is relevant to a transmitted second signal location or a detected first reference signal location.

In some embodiments of any one of the above methods according to the second aspect of the present disclosure, the time interval starts from the next 5 ms half frame after the transmitted second signal.

In some embodiments of any one of the above methods according to the second aspect of the present disclosure, a duration of the time interval is multiple of 5 ms.

In some embodiments of any one of the above methods according to the second aspect of the present disclosure, after the base station detects the second signal, a window/timer is started by the UE for receiving the SSB and/or the system information transmitted by the base station.

In some embodiments of any one of the above methods according to the second aspect of the present disclosure, if the SSB and/or the system information transmitted by the base station is not received by the UE in the window/timer, the second signal is retransmitted by the UE, or the window/timer is restarted by the UE.

In some embodiments of any one of the above methods according to the second aspect of the present disclosure, after the second signal or the second signal plus a delay is transmitted by the UE, the base station transmits the SSB and/or the system information transmitted to the UE.

In some embodiments of any one of the above methods according to the second aspect of the present disclosure, the delay is pre-defined, 5 ms, or multiple of 5 ms.

In a third aspect of the present disclosure, a user equipment includes a memory, a transceiver, and a processor coupled to the memory and the transceiver. The processor is configured to perform the above method.

In a fourth aspect of the present disclosure, a base station includes a memory, a transceiver, and a processor coupled to the memory and the transceiver. The processor is configured to perform the above method.

In a fifth aspect of the present disclosure, a wireless communication device includes a detector configured to detect a first signal transmitted by a base station, wherein the first signal is used for the detector to determine a cell for accessing; and/or a transmitter configured to transmit a second signal to the base station before the detector performs a random access channel (RACH) procedure.

In a sixth aspect of the present disclosure, a wireless communication device includes a transmitter configured to transmit a first signal to a user equipment (UE), wherein the first signal is used for the UE to determine a cell for accessing; and/or a detector configured to detect a second signal transmitted by the UE before controlling the UE to perform a random access channel (RACH) procedure.

In a seventh aspect of the present disclosure, a non-transitory machine-readable storage medium has stored thereon instructions that, when executed by a computer, cause the computer to perform the above method.

In an eighth aspect of the present disclosure, a chip includes a processor, configured to call and run a computer program stored in a memory, to cause a device in which the chip is installed to execute the above method.

In a ninth aspect of the present disclosure, a computer readable storage medium, in which a computer program is stored, causes a computer to execute the above method.

In a tenth aspect of the present disclosure, a computer program product includes a computer program, and the computer program causes a computer to execute the above method.

In an eleventh aspect of the present disclosure, a computer program causes a computer to execute the above method.

### BRIEF DESCRIPTION OF DRAWINGS

In order to illustrate the embodiments of the present disclosure or related art more clearly, the following figures will be described in the embodiments are briefly introduced. It is obvious that the drawings are merely some embodiments of the present disclosure, a person having ordinary skill in this field can obtain other figures according to these figures without paying the premise.
FIG. 1 is a block diagram of one or more user equipments (UEs) and a base station (e.g., gNB) of communication in a communication network system (e.g., non-terrestrial network (NTN) or a terrestrial network) according to an embodiment of the present disclosure.
FIG. 2 is a flowchart illustrating a method of wireless communication performed by a user equipment (UE) according to an embodiment of the present disclosure.
FIG. 3 is a flowchart illustrating a method of wireless communication performed by a base station according to an embodiment of the present disclosure.
FIG. 4 is a schematic diagram illustrating an example that a first signal is transmitted by a base station with a first periodicity, and SSB and/or a system information is transmitted by the base station with a second periodicity according to an embodiment of the present disclosure.
FIG. 5 is a schematic diagram illustrating an example that a first signal is transmitted by a base station with a first periodicity, and SSB and/or a system information is transmitted by the base station with a second periodicity according to another embodiment of the present disclosure.
FIG. 6 is a flowchart illustrating an example of a wireless communication method performed by a UE according to an embodiment of the present disclosure.
FIG. 7 is a flowchart illustrating an example of a wireless communication method performed by a UE and a base station according to an embodiment of the present disclosure.
FIG. 8 is a schematic diagram illustrating an example that a first reference signal is quasi-co-located (QCL'ed) with an SSB associated with a first SSB index, and/or a second reference signal is QCL'ed with an SSB associated with a second SSB index.
FIG. 9 is a schematic diagram illustrating an example that a first reference signal and/or a second reference signal is QCL'ed with an SSB associated with a first SSB index according to an embodiment of the present disclosure.
FIG. 10 is a schematic diagram illustrating an example that a first reference signal is QCL'ed with SSBs associated with a first SSB index and a second SSB index, and a second reference signal is QCL'ed with SSBs associated with a third SSB index and a fourth SSB index according to an embodiment of the present disclosure.
FIG. 11 is a schematic diagram illustrating an example a first symbol location and/or a second symbol location according to an embodiment of the present disclosure.
FIG. 12 is a schematic diagram illustrating an example that a first symbol and a second symbol are consecutive in time domain in time domain according to an embodiment of the present disclosure.
FIG. 13 is a schematic diagram illustrating an example that a first symbol and a second symbol are non-consecutive in time domain according to an embodiment of the present disclosure.
FIG. 14 is a schematic diagram illustrating an example of a resource location of a second signal according to an embodiment of the present disclosure.
FIG. 15 is a block diagram of a wireless communication device according to an embodiment of the present disclosure.
FIG. 16 is a block diagram of a wireless communication device according to an embodiment of the present disclosure.
FIG. 17 is a flowchart illustrating a method of wireless communication performed by a wireless communication device according to an embodiment of the present disclosure.
FIG. 18 is a flowchart illustrating a method of wireless communication performed by a wireless communication device according to an embodiment of the present disclosure.
FIG. 19 is a block diagram of a system for wireless communication according to an embodiment of the present disclosure.

### DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

In a legacy new radio (NR) system, a base station such as a gNB periodically transmits a synchronization signal block (SSB) in the system as well as a system information block type 1 (SIB1) system information, which are used for an idle UE to select a cell for accessing. More specifically, the idle UE detects firstly the SSB and according to the received signal strength, the UE decides to access to the base station corresponding to the detected SSB. An SSB is composed of four symbols, which include primary synchronization signal (PSS), a secondary synchronization signal (SSS), and a physical broadcast channel (PBCH). For PBCH symbols, the PBCH includes demodulation reference signal (DMRS). More details for the SSB can be found in TS38.211 and TS38.213. For example, cell search is the procedure for a UE to acquire time and frequency synchronization with a cell and to detect the physical layer Cell ID of the cell. A UE receives the following synchronization signals (SS) in order to perform cell search: the PSS and SSS as defined in [4, TS 38.211]. A UE assumes that reception occasions of a PBCH, a PSS, and a SSS are in consecutive symbols, as defined in [4, TS 38.211], and form a SS/PBCH block. An SSB burst contains maximum L SSB, with L value depends on the subcarriers spacing. Each SSB has a dedicated symbol location within a 5 ms half frame and a dedicated SSB index. Once the UE detects an SSB and determines the SSB index, the UE can also determine the symbol location within the half frame. Moreover, the PBCH contains master information block (MIB) information, which further provides the UE with the necessary information for the UE to determine a control resource set (coreset) 0 location and a type0 physical downlink control channel (PDCCH) search space set location.

In a future greenfield network, which intends to reduce a network power consumption may avoid transmitting periodically the SSB and/or the SIB1. Instead, the base station may transmit the SSB and/or the SIB1 only when it is needed. For example, when there is at least one idle UE who requires the base station to transmit. In some embodiments of this disclosure, the proposed exemplary method allows the base station to reduce the SSB and/or SIB1 transmission when the transmission is not needed in order to reduce the network power consumption.

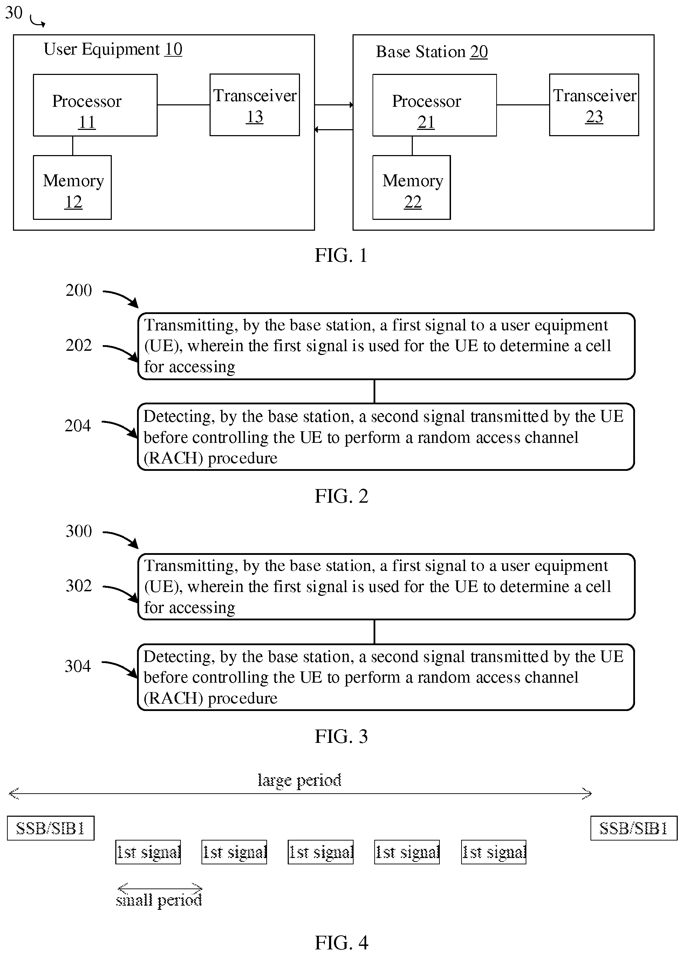

FIG. 1 illustrates that, in some embodiments, one or more user equipments (UEs) 10 and a base station (e.g., gNB) 20 for transmission adjustment in a communication network system 30 (e.g., non-terrestrial network (NTN) or terrestrial network) according to an embodiment of the present disclosure are provided. The communication network system 30 includes the one or more UEs 10 and the base station 20. The one or more UEs 10 may include a memory 12, a transceiver 13, and a processor 11 coupled to the memory 12 and the transceiver 13. The base station 20 may include a memory 22, a transceiver 23, and a processor 21 coupled to the memory 22 and the transceiver 23. The processor 11 or 21 may be configured to implement proposed functions, procedures and/or methods described in this description. Layers of radio interface protocol may be implemented in the processor 11 or 21. The memory 12 or 22 is operatively coupled with the processor 11 or 21 and stores a variety of information to operate the processor 11 or 21. The transceiver 13 or 23 is operatively coupled with the processor 11 or 21, and the transceiver 13 or 23 transmits and/or receives a radio signal.

The processor 11 or 21 may include application-specific integrated circuit (ASIC), other chipset, logic circuit and/or data processing device. The memory 12 or 22 may include read-only memory (ROM), random access memory (RAM), flash memory, memory card, storage medium and/or other storage device. The transceiver 13 or 23 may include baseband circuitry to process radio frequency signals. When the embodiments are implemented in software, the techniques described herein can be implemented with modules (e.g., procedures, functions, and so on) that perform the functions described herein. The modules can be stored in the memory 12 or 22 and executed by the processor 11 or 21. The memory 12 or 22 can be implemented within the processor 11 or 21 or external to the processor 11 or 21 in which case those can be communicatively coupled to the processor 11 or 21 via various means as is known in the art.

In some embodiments, the processor 11 is configured to detect a first signal transmitted by the base station 20, wherein the first signal is used for the processor 11 to determine a cell for accessing; and/or the transceiver 13 is configured to transmit a second signal to the base station 20 before the processor 11 performs a random access channel (RACH) procedure. Optionally, the system information includes a system information block type 1 (SIB1) system information. This can reduce a network power consumption, allow the base station to avoid transmitting a synchronization signal block (SSB) and/or a system information periodically, provide a good communication performance, and/or provide a high reliability.

In some embodiments, the transceiver 23 is configured to transmit a first signal to the UE 10, wherein the first signal is used for the UE 10 to determine a cell for accessing; and/or the processor 21 is configured to detect a second signal transmitted by the UE 10 before controlling the UE 10 to perform a random access channel (RACH) procedure. Optionally, the system information includes a system information block type 1 (SIB1) system information. This can reduce a network power consumption, allow the base station to avoid transmitting a synchronization signal block (SSB) and/or a system information periodically, provide a good communication performance, and/or provide a high reliability.

FIG. 2 illustrates a method 200 of wireless communication by a UE according to an embodiment of the present disclosure. In some embodiments, the method 200 includes: a block 202, detecting, by the UE, a first signal transmitted by a base station, wherein the first signal is used for the UE to determine a cell for accessing; and/or a block 204, transmitting, by the UE, a second signal to the base station before performing a random access channel (RACH) procedure. Optionally, the system information includes a system information block type 1 (SIB1) system information. This can reduce a network power consumption, allow the base station to avoid transmitting a synchronization signal block (SSB) and/or a system information periodically, provide a good communication performance, and/or provide a high reliability.

FIG. 3 illustrates a method 300 of wireless communication by a base station according to an embodiment of the present disclosure. In some embodiments, the method 300 includes: a block 302, transmitting, by the base station, a first signal to a user equipment (UE), wherein the first signal is used for the UE to determine a cell for accessing; and/or a block 304, detecting, by the base station, a second signal transmitted by the UE before controlling the UE to perform a random access channel (RACH) procedure. Optionally, the system information includes a system information block type 1 (SIB1) system information. This can reduce a network power consumption, allow the base station to avoid transmitting a synchronization signal block (SSB) and/or a system information periodically, provide a good communication performance, and/or provide a high reliability.

The examples given in this disclosure can be applied for internet of things (IoT) device or narrowband-internet of things (NB-IoT) UE in non-terrestrial network (NTN) systems, but the method is not exclusively restricted to NTN system nor for IoT devices or NB-IoT UE. The examples given in this disclosure can be applied for NR systems, LTE systems, or NB-IoT systems. Further, some examples in the present disclosure can be applied for NB-IoT system, physical downlink control channel (PDCCH) is equivalent to NB-PDCCH (NPDCCH) and physical downlink shared channel (PDSCH) is equivalent to NB-PDSCH (NPDSCH).

### Example:

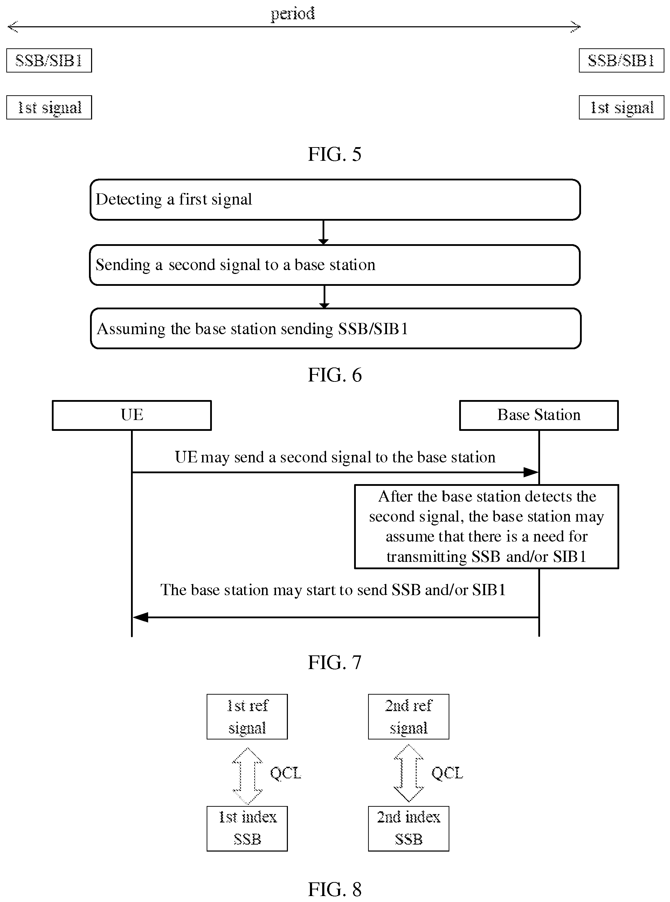

FIG. 4 and FIG. 5 each illustrates an example that a first signal is transmitted by a base station with a first periodicity, and SSB and/or a system information is transmitted by the base station with a second periodicity according to an embodiment of the present disclosure. FIG. 4 and FIG. 5 illustrate that, in some embodiments, from the base station side, the base station may use a second periodicity to transmit the SSB and/or SIB1 and on the top of it, the base station may transmit a first signal with a first periodicity. Optionally, the second periodicity is less than the first periodicity as illustrated in FIG. 4. Optionally, the second periodicity is equal to the first periodicity as illustrated in FIG. 5. The large period SSB and/or SIB1 can reduce the network power consumption and the first signal is used for an idle UE to detect the presence of a cell and to allow the idle UE to obtain a reference signal received power (RSRP) of the cell, or the cell signal strength for the cell selection. Optionally, the base station may only transmit the first signal in a default mode without transmitting the SSB and/or SIB1.

FIG. 6 illustrates an example of a wireless communication method performed by a UE according to an embodiment of the present disclosure. FIG. 6 illustrated that, in some embodiments, when an idle UE detects a first signal, and if the UE intends to access to a base station, the UE may send a second signal to the base station. Further, the UE assumes that the base station is configured to transmit the SSB and/or the SIB1 after the UE transmitting the second signal. This achieves the goal of SSB and/or SIB1 transmission only when it is needed. FIG. 7 illustrates an example of a wireless communication method performed by a UE and a base station according to an embodiment of the present disclosure. FIG. 7 illustrated that, in some embodiments, when an idle UE detects a first signal, and if the UE intends to access to a base station, the UE may send a second signal to the base station. After the base station detects the second signal, the base station may assume that there is a need for transmitting SSB and/or SIB1. Then the base station may start to send SSB and/or SIB1, which achieves the goal of SSB and/or SIB1 transmission only when it is needed.

FIG. 8 illustrates an example that a first reference signal is quasi-co-located (QCL'ed) with an SSB associated with a first SSB index, and/or a second reference signal is QCL'ed with an SSB associated with a second SSB index. In some examples, the first signal contains a first reference signal and/or a second reference signal. The first reference signal corresponds to a first index, and the second reference signal corresponds to a second index. The first reference signal and the second reference signal are not overlapped in time domain. In some examples, the first index is relevant to a first SSB index, and the second index is relevant to a second SSB index. Thus, the first reference signal is QCL'ed with the SSB associated with the first SSB index. The second reference signal is QCL'ed with the SSB associated with the second SSB index. Therefore, by detecting the first reference signal and/or the second reference signal, the UE can obtain a downlink QCL assumption without detecting directly the SSB and/or SIB1. This allows the base station to avoid transmitting SSB and/or SIB1 periodically.

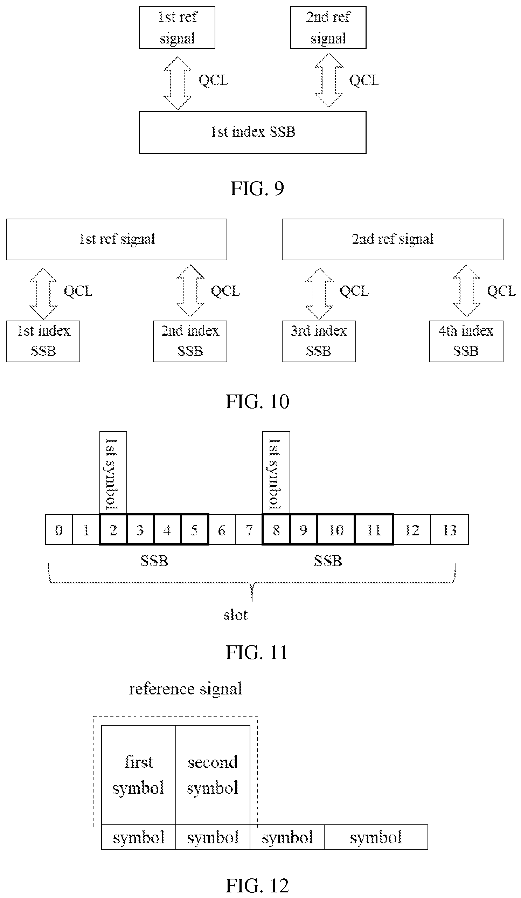

FIG. 9 illustrates an example that a first reference signal and/or a second reference signal is QCL'ed with an SSB associated with a first SSB index according to an embodiment of the present disclosure. In some embodiments, the first reference signal and/or the second reference signal corresponds to a first index, and the first index is relevant to a first SSB index. In some embodiments, the first reference signal and/or the second reference signal is QCL'ed with an SSB associated with the first SSB index. Therefore, by detecting the first reference signal and/or the second reference signal, the UE can obtain a downlink QCL assumption without detecting directly the SSB and/or SIB1. This allows the base station to avoid transmitting SSB and/or SIB1 periodically.

FIG. 10 illustrates an example that a first reference signal is QCL'ed with SSBs associated with a first SSB index and a second SSB index, and a second reference signal is QCL'ed with SSBs associated with a third SSB index and a fourth SSB index according to an embodiment of the present disclosure. In some embodiments, the first reference signal corresponds to a first index and a second index, the first index is relevant to a first SSB index, and the second index is relevant to a second SSB index; and/or the second reference signal corresponds to a third index and a fourth index, the third index is relevant to a third SSB index, and the fourth index is relevant to a fourth SSB index. In some embodiments, the first reference signal is QCL'ed with SSBs associated with the first SSB index and the second SSB index, and the second reference signal is QCL'ed with SSBs associated with the third SSB index and the fourth SSB index. Therefore, by detecting the first reference signal and/or the second reference signal, the UE can obtain a downlink QCL assumption without detecting directly the SSB and/or SIB1. This allows the base station to avoid transmitting SSB and/or SIB1 periodically.

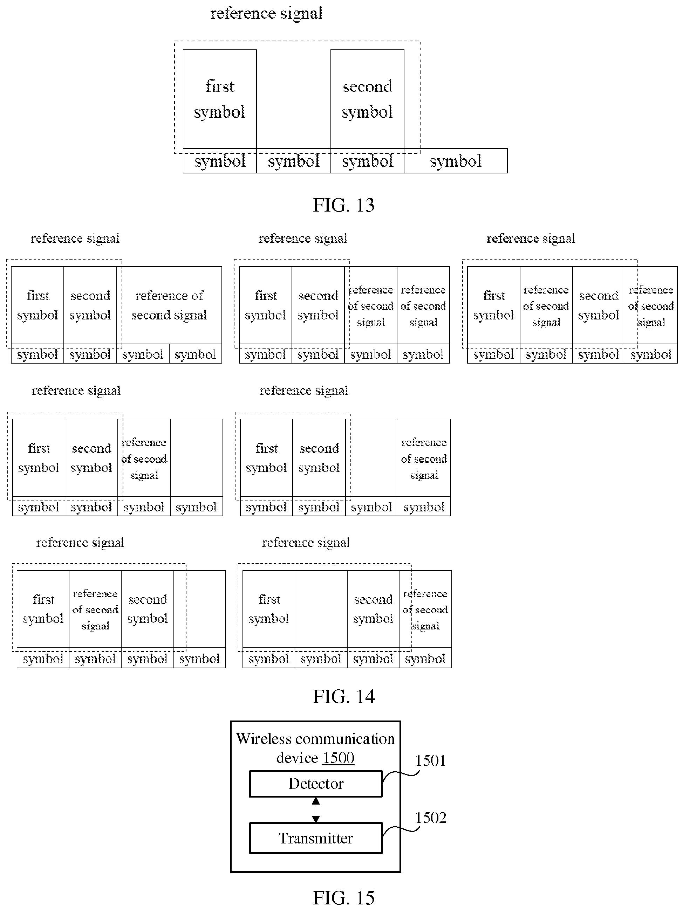

FIG. 11 illustrates an example a first symbol location and/or a second symbol location according to an embodiment of the present disclosure. FIG. 12 illustrates an example that a first symbol and a second symbol are consecutive in time domain in time domain according to an embodiment of the present disclosure. FIG. 13 illustrates an example that a first symbol and a second symbol are non-consecutive in time domain according to an embodiment of the present disclosure. FIG. 11 to FIG. 13 illustrate that, in some examples, the reference signal contains at least one or more symbols. The one or more symbols contain at least a first symbol and/or a second symbol. The first symbol has a pre-defined location. The pre-defined location is relevant to a PSS location of an SSB. In some examples, the location of the first symbol of the first reference signal is the same as the PSS location of the SSB of the first SSB index. The first symbol of the second reference signal is the same as the PSS location of the SSB of the second SSB index. In some examples, the second symbol location is relevant to the first symbol location. In some examples, the first symbol and the second symbol are consecutive in time domain (as illustrated in FIG. 12) or non-consecutive (as illustrated in FIG. 13) in time domain. In some examples, FIG. 11 illustrates that the first symbol is related to the first symbol of SSB. In some examples, FIG. 13 illustrates that the non-consecutive interval is less than or equal to 4 symbols of SSB. In some examples, the first symbol or the second symbol is first sequence. In some examples, the first symbol and/or the second symbol is PSS. In some examples, the first symbol or the second symbol is second sequence. The first sequence or second sequence is selected from a set of candidate sequences. The first sequence or second sequence is PSS or SSS. In some examples, the second symbol is based on a sequence, where the sequence is selected from a set of candidate sequences. In some examples, the index of the reference signal is determined based on the sequence of the second symbol. In some examples, the sequence of the second symbol of the first reference signal is different from the sequence of the second symbol of the second reference signal. In some examples, resource blocks (RBs) of a bandwidth of the first sequence and the second sequence in frequency domain are aligned.

FIG. 14 illustrates an example of a resource location of a second signal according to an embodiment of the present disclosure. FIG. 14 illustrates that, in some examples, the second signal is from the UE to the base station. The resource location of the second signal is determined based on the first signal. The resource location of the second signal is pre-defined. In some examples, the location of the second signal is next to the location of the first signal. Optionally, the location of the second signal is shifted from the location of the first signal by an offset. In some examples, the offset is known to the UE, or the offset is pre-defined. In some examples, the resource of the second signal is overlapped or partially overlapped with SSB in time domain. When UE transmits the second signal in the second signal resource, the UE assumes a default value for N_{TA, offset} according to TS213 section 4.2, N_{TA}=0, and/or N_{offset} is per-defined. For example, the UE can be provided a value N_{TA, offset} of a timing advance offset for a serving cell by n-TimingAdvanceOffset for the serving cell. If the UE is not provided n-TimingAdvanceOffset for a serving cell, the UE determines a default value N_{TA, offset} of the timing advance offset for the serving cell as described in [10, TS 38.133. Optionally, the value of N_{TA, offset} is determined based on the first symbol and/or the second symbol of the first signal. In some examples, there is a first resource of the second signal that is associated with the first reference signal, and there is a second resource of the second signal that is associated with the second reference signal. When the UE detects the first reference signal and intends to send the second signal, the UE may send the second signal in the first resource. Optionally, when the UE detects the second reference signal and intends to send the second signal, the UE may send the second signal in the second resource.

In some examples, after the UE transmitting the second signal, the UE may assume that the base station may transmit the SSB and/or the SIB1 in a time interval, where the start location of the time interval is relevant to the transmitted second signal location or to the detected first reference signal location. In some examples, the time interval starts from the next 5 ms half frame after the transmitted second signal. In some examples, the time interval duration may be multiple of 5 ms.

In some examples, after the UE transmits the second signal, the UE starts a window/timer for receiving the SSB and/or the system information transmitted by the base station. In some examples, if the UE does not receive the SSB and/or the system information transmitted by the base station in the window/timer, the UE retransmits the second signal or restarts the window/timer. In some examples, after the UE transmits the second signal or the UE transmits the second signal plus a delay, the UE expects to receive the SSB and/or the system information transmitted by the base station. In some examples, the delay is pre-defined, 5 ms, or multiple of 5 ms.

FIG. 15 illustrates a wireless communication device 1500 according to an embodiment of the present disclosure. The wireless communication device 1500 includes a detector 1501 configured to detect a first signal transmitted by a base station, wherein the first signal is used for the detector 1501 to determine a cell for accessing; and/or a transmitter 1502 configured to transmit a second signal to the base station before the detector 1501 performs a random access channel (RACH) procedure. This can reduce a network power consumption, allow the base station to avoid transmitting a synchronization signal block (SSB) and/or a system information periodically, provide a good communication performance, and/or provide a high reliability.

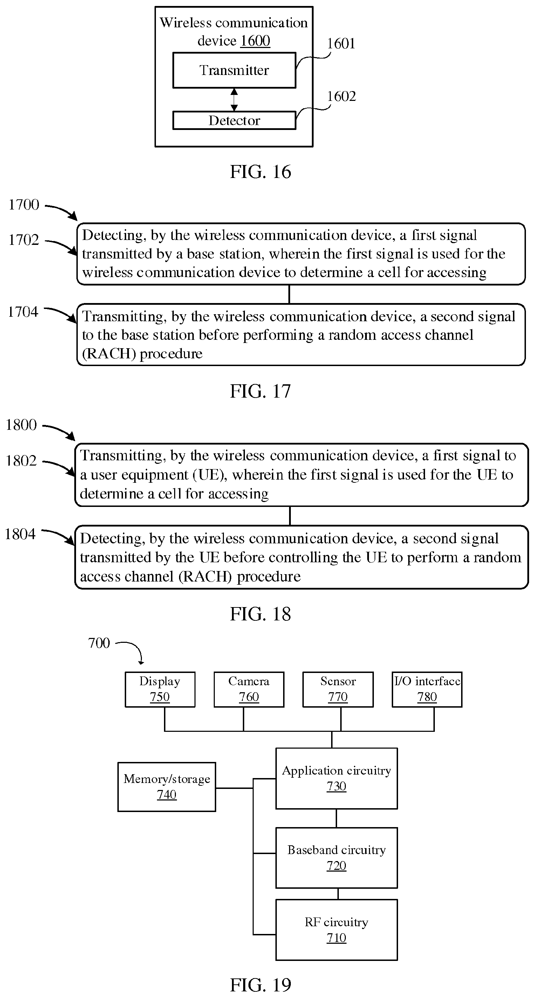

FIG. 16 illustrates a wireless communication device 1600 according to an embodiment of the present disclosure. The wireless communication device 1600 includes a transmitter 1601 configured to transmit a first signal to a user equipment (UE), wherein the first signal is used for the UE to determine a cell for accessing; and/or a detector 1602 configured to detect a second signal transmitted by the UE before controlling the UE to perform a random access channel (RACH) procedure. This can reduce a network power consumption, allow the base station to avoid transmitting a synchronization signal block (SSB) and/or a system information periodically, provide a good communication performance, and/or provide a high reliability.

FIG. 17 illustrates a method 1700 of wireless communication by a wireless communication device according to an embodiment of the present disclosure. In some embodiments, the method 1700 includes: a block 1702, detecting, by the wireless communication device, a first signal transmitted by a base station, wherein the first signal is used for the wireless communication device to determine a cell for accessing; and/or a block 1704, transmitting, by the wireless communication device, a second signal to the base station before performing a random access channel (RACH) procedure. Optionally, the system information includes a system information block type 1 (SIB1) system information. This can reduce a network power consumption, allow the base station to avoid transmitting a synchronization signal block (SSB) and/or a system information periodically, provide a good communication performance, and/or provide a high reliability. The wireless communication device may be a UE.

FIG. 18 illustrates a method 1800 of wireless communication by a wireless communication device according to an embodiment of the present disclosure. In some embodiments, the method 1800 includes: a block 1802, transmitting, by the wireless communication device, a first signal to a user equipment (UE), wherein the first signal is used for the UE to determine a cell for accessing; and/or a block 1804, detecting, by the wireless communication device, a second signal transmitted by the UE before controlling the UE to perform a random access channel (RACH) procedure. Optionally, the system information includes a system information block type 1 (SIB1) system information. This can reduce a network power consumption, allow the base station to avoid transmitting a synchronization signal block (SSB) and/or a system information periodically, provide a good communication performance, and/or provide a high reliability. The wireless communication device may be a base station.

In some embodiments, if the UE intends to access to the cell of the base station, the second signal is used for the base station to assume that there is a need for transmitting a synchronization signal block (SSB) and/or a system information. In some embodiments, the method further includes assuming, by the UE, that the UE is configured to receive from the base station the SSB and/or the system information after the UE transmitting the second signal. Optionally, the system information includes a system information block type 1 (SIB1) system information. In some embodiments, the first signal is transmitted by the base station with a first periodicity, and the SSB and/or the system information is transmitted by the base station with a second periodicity, and the first periodicity is less than or equal to the second periodicity. In some embodiments, the first signal includes a first reference signal and/or a second reference signal. In some embodiments, the first reference signal corresponds to a first index, and/or the second reference signal corresponds to a second index.

In some embodiments, the first reference signal and the second reference signal are not overlapped in time domain. In some embodiments, the first index is relevant to a first SSB index, and/or the second index is relevant to a second SSB index. In some embodiments, the first reference signal is quasi-co-located (QCL'ed) with an SSB associated with the first SSB index, and/or the second reference signal is QCL'ed with an SSB associated with the second SSB index. In some embodiments, the first reference signal and/or the second reference signal corresponds to a first index, and the first index is relevant to a first SSB index. In some embodiments, the first reference signal and/or the second reference signal is QCL'ed with an SSB associated with the first SSB index. In some embodiments, the first reference signal corresponds to a first index and a second index, the first index is relevant to a first SSB index, and the second index is relevant to a second SSB index, and/or the second reference signal corresponds to a third index and a fourth index, the third index is relevant to a third SSB index, and the fourth index is relevant to a fourth SSB index.

In some embodiments, the first reference signal is QCL'ed with SSBs associated with the first SSB index and the second SSB index, and the second reference signal is QCL'ed with SSBs associated with the third SSB index and the fourth SSB index. In some embodiments, the first reference signal and/or the second reference signal includes one or more symbols, and the one or more symbols includes a first symbol and/or a second symbol. In some embodiments, the first symbol of the first reference signal and/or the second reference signal has a pre-defined location. In some embodiments, the pre-defined location is relevant to a primary synchronization signal (PSS) location of an SSB. In some embodiments, a location of the first symbol of the first reference signal is the same as the PSS location of the SSB of the first SSB index. In some embodiments, a location of the first symbol of the second reference signal is the same as the PSS location of the SSB of the second SSB index.

In some embodiments, the location of the second symbol is relevant to the location of the first symbol. In some embodiments, the first symbol and the second symbol are consecutive in time domain or non-consecutive in time domain. In some embodiments, the first symbol and/or the second symbol includes a PSS. In some embodiments, one of the first symbol and the second symbol includes a first sequence, and the other of the first symbol and the second symbol includes a second sequence. In some embodiments, the first sequence or the second sequence includes a PSS or a secondary synchronization signal (SSS). In some embodiments, the first sequence or the second sequence is selected from a set of candidate sequences. In some embodiments, resource blocks (RBs) of a bandwidth of the first sequence and the second sequence in frequency domain are aligned. In some embodiments, an index of the first reference signal or the second reference signal is determined based on the second sequence. In some embodiments, a sequence of the set of candidate sequences is associated with an index.

In some embodiments, the second sequence of the first reference signal is different from the second sequence of the second reference signal. In some embodiments, a location of the second signal is determined based on the first signal or the index of the first signal, or the location of the second signal is pre-defined. In some embodiments, the location of the second signal is next to a location of the first signal. In some embodiments, the location of the second signal is shifted from the location of the first signal by an offset. In some embodiments, the offset is known to the UE, or the offset is pre-defined. In some embodiments, a resource of the second signal is overlapped or partially overlapped with an SSB symbol location in time domain. In some embodiments, when the UE transmits the second signal, the UE assumes a value for N_{TA, offset} of a timing advance offset for the cell of the base station. In some embodiments, N_{TA} is equal to 0, and/or N_{offset} is pre-defined.

In some embodiments, the value of N_{TA, offset} is determined based on the first symbol and/or the second symbol of the first signal. In some embodiments, a first resource of the second signal is associated with the first reference signal, and a second resource of the second signal is associated with the second reference signal. In some embodiments, when the UE detects the first reference signal and intends to send the second signal, the UE transmits the second signal in the first resource. In some embodiments, when the UE detects the second reference signal and intends to send the second signal, the UE transmits the second signal in the second resource. In some embodiments, after the UE transmits the second signal, the UE assumes that the base station transmits the SSB and/or the system information in a time interval, where a start location of the time interval is relevant to a transmitted second signal location or a detected first reference signal location. In some embodiments, the time interval starts from the next 5 ms half frame after the transmitted second signal. In some embodiments, a duration of the time interval is multiple of 5 ms.

In some embodiments, after the UE transmits the second signal, the UE starts a window/timer for receiving the SSB and/or the system information transmitted by the base station. In some embodiments, if the UE does not receive the SSB and/or the system information transmitted by the base station in the window/timer, the UE retransmits the second signal or restarts the window/timer. In some embodiments, after the UE transmits the second signal or the UE transmits the second signal plus a delay, the UE expects to receive the SSB and/or the system information transmitted by the base station. In some embodiments, the delay is pre-defined, 5 ms, or multiple of 5 ms.

Commercial interests for some embodiments are as follows. 1. Reducing a network power consumption. 2. Allowing the base station to avoid transmitting a synchronization signal block (SSB) and/or a system information periodically. 3. Providing a good communication performance. 4. Providing a high reliability. 5. Some embodiments of the present disclosure are used by 5G-NR chipset vendors, V2X communication system development vendors, automakers including cars, trains, trucks, buses, bicycles, moto-bikes, helmets, and etc., drones (unmanned aerial vehicles), smartphone makers, communication devices for public safety use, AR/VR device maker for example gaming, conference/seminar, education purposes. Some embodiments of the present disclosure are a combination of "techniques/processes" that can be adopted in 3GPP specification to create an end product. Some embodiments of the present disclosure could be adopted in 5G NR licensed and non-licensed or shared spectrum communications. Some embodiments of the present disclosure propose technical mechanisms.

FIG. 19 is a block diagram of an example system 700 for wireless communication according to an embodiment of the present disclosure. Embodiments described herein may be implemented into the system using any suitably configured hardware and/or software. FIG. 19 illustrates the system 700 including a radio frequency (RF) circuitry 710, a baseband circuitry 720, an application circuitry 730, a memory/storage 740, a display 750, a camera 760, a sensor 770, and an input/output (I/O) interface 780, coupled with each other at least as illustrated. The application circuitry 730 may include a circuitry such as, but not limited to, one or more single-core or multi-core processors. The processors may include any combination of general-purpose processors and dedicated processors, such as graphics processors, application processors. The processors may be coupled with the memory/storage and configured to execute instructions stored in the memory/storage to enable various applications and/or operating systems running on the system.

The baseband circuitry 720 may include circuitry such as, but not limited to, one or more single-core or multi-core processors. The processors may include a baseband processor. The baseband circuitry may handle various radio control functions that enables communication with one or more radio networks via the RF circuitry. The radio control functions may include, but are not limited to, signal modulation, encoding, decoding, radio frequency shifting, etc. In some embodiments, the baseband circuitry may provide for communication compatible with one or more radio technologies. For example, in some embodiments, the baseband circuitry may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry is configured to support radio communications of more than one wireless protocol may be referred to as multi-mode baseband circuitry.

In various embodiments, the baseband circuitry 720 may include circuitry to operate with signals that are not strictly considered as being in a baseband frequency. For example, in some embodiments, baseband circuitry may include circuitry to operate with signals having an intermediate frequency, which is between a baseband frequency and a radio frequency. The RF circuitry 710 may enable communication with wireless networks using modulated electromagnetic radiation through a non-solid medium. In various embodiments, the RF circuitry may include switches, filters, amplifiers, etc. to facilitate the communication with the wireless network. In various embodiments, the RF circuitry 710 may include circuitry to operate with signals that are not strictly considered as being in a radio frequency. For example, in some embodiments, RF circuitry may include circuitry to operate with signals having an intermediate frequency, which is between a baseband frequency and a radio frequency.

In various embodiments, the transmitter circuitry, control circuitry, or receiver circuitry discussed above with respect to the user equipment, eNB, or gNB may be embodied in whole or in part in one or more of the RF circuitry, the baseband circuitry, and/or the application circuitry. As used herein, "circuitry" may refer to, be part of, or include an Application Specific Integrated Circuit (ASIC), an electronic circuit, a processor (shared, dedicated, or group), and/or a memory (shared, dedicated, or group) that execute one or more software or firmware programs, a combinational logic circuit, and/or other suitable hardware components that provide the described functionality. In some embodiments, the electronic device circuitry may be implemented in, or functions associated with the circuitry may be implemented by, one or more software or firmware modules. In some embodiments, some or all of the constituent components of the baseband circuitry, the application circuitry, and/or the memory/storage may be implemented together on a system on a chip (SOC). The memory/storage 740 may be used to load and store data and/or instructions, for example, for system. The memory/storage for one embodiment may include any combination of suitable volatile memory, such as dynamic random access memory (DRAM)), and/or non-volatile memory, such as flash memory.

In various embodiments, the I/O interface 780 may include one or more user interfaces designed to enable user interaction with the system and/or peripheral component interfaces designed to enable peripheral component interaction with the system. User interfaces may include, but are not limited to a physical keyboard or keypad, a touchpad, a speaker, a microphone, etc. Peripheral component interfaces may include, but are not limited to, a non-volatile memory port, a universal serial bus (USB) port, an audio jack, and a power supply interface. In various embodiments, the sensor 770 may include one or more sensing devices to determine environmental conditions and/or location information related to the system. In some embodiments, the sensors may include, but are not limited to, a gyro sensor, an accelerometer, a proximity sensor, an ambient light sensor, and a positioning unit. The positioning unit may also be part of, or interact with, the baseband circuitry and/or RF circuitry to communicate with components of a positioning network, e.g., a global positioning system (GPS) satellite.

In various embodiments, the display 750 may include a display, such as a liquid crystal display and a touch screen display. In various embodiments, the system 700 may be a mobile computing device such as, but not limited to, a laptop computing device, a tablet computing device, a netbook, an ultrabook, a smartphone, an AR/VR glasses, etc. In various embodiments, system may have more or less components, and/or different architectures. Where appropriate, methods described herein may be implemented as a computer program. The computer program may be stored on a storage medium, such as a non-transitory storage medium.

A person having ordinary skill in the art understands that each of the units, algorithm, and steps described and disclosed in the embodiments of the present disclosure are realized using electronic hardware or combinations of software for computers and electronic hardware. Whether the functions run in hardware or software depends on the condition of application and design requirement for a technical plan. A person having ordinary skill in the art can use different ways to realize the function for each specific application while such realizations should not go beyond the scope of the present disclosure. It is understood by a person having ordinary skill in the art that he/she can refer to the working processes of the system, device, and unit in the above-mentioned embodiment since the working processes of the above-mentioned system, device, and unit are basically the same. For easy description and simplicity, these working processes will not be detailed.

It is understood that the disclosed system, device, and method in the embodiments of the present disclosure can be realized with other ways. The above-mentioned embodiments are exemplary only. The division of the units is merely based on logical functions while other divisions exist in realization. It is possible that a plurality of units or components are combined or integrated in another system. It is also possible that some characteristics are omitted or skipped. On the other hand, the displayed or discussed mutual coupling, direct coupling, or communicative coupling operate through some ports, devices, or units whether indirectly or communicatively by ways of electrical, mechanical, or other kinds of forms.

The units as separating components for explanation are or are not physically separated. The units for display are or are not physical units, that is, located in one place or distributed on a plurality of network units. Some or all of the units are used according to the purposes of the embodiments. Moreover, each of the functional units in each of the embodiments can be integrated in one processing unit, physically independent, or integrated in one processing unit with two or more than two units.

If the software function unit is realized and used and sold as a product, it can be stored in a readable storage medium in a computer. Based on this understanding, the technical plan proposed by the present disclosure can be essentially or partially realized as the form of a software product. Or, one part of the technical plan beneficial to the conventional technology can be realized as the form of a software product. The software product in the computer is stored in a storage medium, including a plurality of commands for a computational device (such as a personal computer, a server, or a network device) to run all or some of the steps disclosed by the embodiments of the present disclosure. The storage medium includes a USB disk, a mobile hard disk, a read-only memory (ROM), a random access memory (RAM), a floppy disk, or other kinds of media capable of storing program codes.

While the present disclosure has been described in connection with what is considered the most practical and preferred embodiments, it is understood that the present disclosure is not limited to the disclosed embodiments but is intended to cover various arrangements made without departing from the scope of the broadest interpretation of the appended claims.

## Claims

1. A wireless communication method by a user equipment, UE, comprising:
detecting (202), by the UE, a first signal transmitted by a base station, wherein the first signal is used for the UE to determine a cell for accessing, and the first signal comprises a first reference signal and/or a second reference signal;
transmitting (204), by the UE, a second signal to the base station before performing a random access channel, RACH, procedure, wherein if the UE intends to access to the cell of the base station, the second signal is used for the base station to assume that there is a need for transmitting a synchronization signal block, SSB, and/or a system information; and
assuming, by the UE, that the UE is configured to receive from the base station the SSB and/or the system information after the UE transmits the second signal;
**characterized in that**:
after the UE transmits the second signal, the UE assumes that the base station transmits the SSB and/or the system information in a time interval, where a start location of the time interval is relevant to a transmitted second signal location or a detected first reference signal location; and
the time interval starts from the next 5 ms half frame after the transmitted second signal, and a duration of the time interval is multiple of 5 ms.

2. The method of claim 1, wherein the first signal is transmitted by the base station with a first periodicity, and the SSB and/or the system information is transmitted by the base station with a second periodicity, and the first periodicity is less than or equal to the second periodicity.

3. The method of claim 1, wherein the first reference signal corresponds to a first index, and/or the second reference signal corresponds to a second index.

4. The method of claim 1 or 3, wherein the first reference signal and the second reference signal are not overlapped in time domain.

5. The method of claim 3 or 4, wherein the first index is relevant to a first SSB index, and/or the second index is relevant to a second SSB index, wherein the first reference signal is quasi-co-located, QCL'ed, with an SSB associated with the first SSB index, and/or the second reference signal is QCL'ed with an SSB associated with the second SSB index.

6. The method of any one of claims 1 and 3 to 5, wherein the first reference signal and/or the second reference signal comprises one or more symbols, and the one or more symbols comprise a first symbol and/or a second symbol.

7. The method of claim 6, wherein the first symbol of the first reference signal and/or the second reference signal has a pre-defined location, and/or the pre-defined location is relevant to a primary synchronization signal, PSS, location of an SSB, wherein a location of the first symbol of the first reference signal is the same as the PSS location of the SSB of the first SSB index, and/or a location of the first symbol of the second reference signal is the same as the PSS location of the SSB of the second SSB index.

8. The method of claim 7, wherein the first symbol and/or the second symbol comprises a PSS.

9. The method of any one of claims 1 to 8, wherein a location of the second signal is determined based on the first signal or the index of the first signal, or the location of the second signal is pre-defined.

10. A wireless communication method by a base station, comprising:
transmitting (302), by the base station, a first signal to a user equipment, UE, wherein the first signal is used for the UE to determine a cell for accessing, and the first signal comprises a first reference signal and/or a second reference signal;
detecting (304), by the base station, a second signal transmitted by the UE before controlling the UE to perform a random access channel, RACH, procedure, wherein if the UE intends to access to the cell of the base station, the second signal is used for the base station to assume that there is a need for transmitting a synchronization signal block, SSB, and/or a system information; and
transmitting, by the base station, the SSB and/or the system information to the UE after detecting the second signal;
**characterized in that**:
after the base station detects the second signal, the base station transmits the SSB and/or the system information in a time interval, where a start location of the time interval is relevant to a transmitted second signal location or a detected first reference signal location; and
the time interval starts from the next 5 ms half frame after the transmitted second signal, and a duration of the time interval is multiple of 5 ms.

11. A user equipment, UE (10), comprising:
a memory (12);
a transceiver (13); and
a processor (11) coupled to the memory (12) and the transceiver (13);
wherein the processor (11) is configured to detect a first signal transmitted by a base station, wherein the first signal is used for the UE to determine a cell for accessing, and the first signal comprises a first reference signal and/or a second reference signal;
wherein the transceiver (13) is configured to transmit a second signal to the base station before the UE performs a random access channel, RACH, procedure, wherein if the UE intends to access to the cell of the base station, the second signal is used for the base station to assume that there is a need for transmitting a synchronization signal block, SSB, and/or a system information; and
wherein the processor (11) is configured to assume that the UE is configured to receive from the base station the SSB and/or the system information after the UE transmits the second signal;
**characterized in that**:
after the UE transmits the second signal, the UE assumes that the base station transmits the SSB and/or the system information in a time interval, where a start location of the time interval is relevant to a transmitted second signal location or a detected first reference signal location; and
the time interval starts from the next 5 ms half frame after the transmitted second signal, and a duration of the time interval is multiple of 5 ms.

12. A base station (20), comprising:
a memory (22);
a transceiver (23); and
a processor (21) coupled to the memory (22) and the transceiver (23);
wherein the transceiver (23) is configured to transmit a first signal to a user equipment, UE, wherein the first signal is used for the UE to determine a cell for accessing, and the first signal comprises a first reference signal and/or a second reference signal;
wherein the processor (21) is configured to detect a second signal transmitted by the UE before controlling the UE to perform a random access channel, RACH, procedure, wherein if the UE intends to access to the cell of the base station, the second signal is used for the base station to assume that there is a need for transmitting a synchronization signal block, SSB, and/or a system information; and
wherein the transceiver (23) is configured to transmit the SSB and/or the system information to the UE after detecting the second signal,
**characterized in that**:
after the base station detects the second signal, the base station transmits the SSB and/or the system information in a time interval, where a start location of the time interval is relevant to a transmitted second signal location or a detected first reference signal location; and
the time interval starts from the next 5 ms half frame after the transmitted second signal, and a duration of the time interval is multiple of 5 ms.

## Patentansprüche

1. Verfahren zur drahtlosen Kommunikation durch ein Benutzergerät, UE, umfassend:
Detektieren (202), durch das UE, eines ersten Signals, das von einer Basisstation übertragen wird, wobei das erste Signal dazu verwendet wird, dass das UE eine Zelle für den Zugang bestimmt, und das erste Signal ein erstes Referenzsignal und/oder ein zweites Referenzsignal umfasst;
Übertragen (204), durch das UE, eines zweiten Signals an die Basisstation vor dem Durchführen einer Direktzugriffskanal-, RACH-, Prozedur, wobei, wenn das UE beabsichtigt, auf die Zelle der Basisstation zuzugreifen, das zweite Signal dazu verwendet wird, dass die Basisstation annimmt, dass ein Bedarf zum Übertragen eines Synchronisationssignalblocks, SSB, und/oder einer Systeminformation besteht; und
Annehmen, durch das UE, dass das UE dazu konfiguriert ist, von der Basisstation den SSB und/oder die Systeminformation zu empfangen, nachdem das UE das zweite Signal überträgt;
**dadurch gekennzeichnet, dass**:
nachdem das UE das zweite Signal überträgt, das UE annimmt, dass die Basisstation den SSB und/oder die Systeminformation in einem Zeitintervall überträgt, wobei ein Startort des Zeitintervalls in Bezug auf einen Ort eines übertragenen zweiten Signals oder einen Ort eines detektierten ersten Referenzsignals steht; und
das Zeitintervall ab dem nächsten 5-ms-Halbrahmen nach dem übertragenen zweiten Signal beginnt, und eine Dauer des Zeitintervalls ein Vielfaches von 5 ms ist.

2. Verfahren nach Anspruch 1, wobei das erste Signal von der Basisstation mit einer ersten Periodizität übertragen wird, und der SSB und/oder die Systeminformation von der Basisstation mit einer zweiten Periodizität übertragen wird, und die erste Periodizität kleiner als oder gleich der zweiten Periodizität ist.

3. Verfahren nach Anspruch 1, wobei das erste Referenzsignal einem ersten Index entspricht, und/oder das zweite Referenzsignal einem zweiten Index entspricht.

4. Verfahren nach Anspruch 1 oder 3, wobei sich das erste Referenzsignal und das zweite Referenzsignal im Zeitbereich nicht überlappen.

5. Verfahren nach Anspruch 3 oder 4, wobei der erste Index in Bezug auf einen ersten SSB-Index steht, und/oder der zweite Index in Bezug auf einen zweiten SSB-Index steht, wobei das erste Referenzsignal mit einem SSB, der dem ersten SSB-Index zugeordnet ist, quasi-kolokiert, QCL, ist, und/oder das zweite Referenzsignal mit einem SSB, der dem zweiten SSB-Index zugeordnet ist, QCL ist.

6. Verfahren nach einem der Ansprüche 1 und 3 bis 5, wobei das erste Referenzsignal und/oder das zweite Referenzsignal ein oder mehrere Symbole umfasst, und das eine oder die mehreren Symbole ein erstes Symbol und/oder ein zweites Symbol umfassen.

7. Verfahren nach Anspruch 6, wobei das erste Symbol des ersten Referenzsignals und/oder des zweiten Referenzsignals einen vordefinierten Ort aufweist, und/oder der vordefinierte Ort in Bezug auf einen Ort eines primären Synchronisationssignals, PSS, eines SSB steht, wobei ein Ort des ersten Symbols des ersten Referenzsignals der gleiche ist wie der PSS-Ort des SSB des ersten SSB-Index, und/oder ein Ort des ersten Symbols des zweiten Referenzsignals der gleiche ist wie der PSS-Ort des SSB des zweiten SSB-Index.

8. Verfahren nach Anspruch 7, wobei das erste Symbol und/oder das zweite Symbol ein PSS umfasst.

9. Verfahren nach einem der Ansprüche 1 bis 8, wobei ein Ort des zweiten Signals auf der Grundlage des ersten Signals oder des Index des ersten Signals bestimmt wird, oder der Ort des zweiten Signals vordefiniert ist.

10. Verfahren zur drahtlosen Kommunikation durch eine Basisstation, umfassend:
Übertragen (302), durch die Basisstation, eines ersten Signals an ein Benutzergerät, UE, wobei das erste Signal dazu verwendet wird, dass das UE eine Zelle für den Zugang bestimmt, und das erste Signal ein erstes Referenzsignal und/oder ein zweites Referenzsignal umfasst;
Detektieren (304), durch die Basisstation, eines zweiten Signals, das von dem UE übertragen wird, bevor das UE angewiesen wird, eine Direktzugriffskanal-, RACH-, Prozedur durchzuführen, wobei, wenn das UE beabsichtigt, auf die Zelle der Basisstation zuzugreifen, das zweite Signal dazu verwendet wird, dass die Basisstation annimmt, dass ein Bedarf zum Übertragen eines Synchronisationssignalblocks, SSB, und/oder einer Systeminformation besteht; und
Übertragen, durch die Basisstation, des SSB und/oder der Systeminformation an das UE nach dem Detektieren des zweiten Signals;
**dadurch gekennzeichnet, dass**:
nachdem die Basisstation das zweite Signal detektiert, die Basisstation den SSB und/oder die Systeminformation in einem Zeitintervall überträgt, wobei ein Startort des Zeitintervalls in Bezug auf einen Ort eines übertragenen zweiten Signals oder einen Ort eines detektierten ersten Referenzsignals steht; und
das Zeitintervall ab dem nächsten 5-ms-Halbrahmen nach dem übertragenen zweiten Signal beginnt, und eine Dauer des Zeitintervalls ein Vielfaches von 5 ms ist.

11. Benutzergerät, UE (10), umfassend:
einen Speicher (12);
einen Sendeempfänger (13); und
einen Prozessor (11), der mit dem Speicher (12) und dem Sendeempfänger (13) gekoppelt ist;
wobei der Prozessor (11) dazu konfiguriert ist, ein erstes Signal zu detektieren, das von einer Basisstation übertragen wird, wobei das erste Signal dazu verwendet wird, dass das UE eine Zelle für den Zugang bestimmt, und das erste Signal ein erstes Referenzsignal und/oder ein zweites Referenzsignal umfasst;
wobei der Sendeempfänger (13) dazu konfiguriert ist, ein zweites Signal an die Basisstation zu übertragen, bevor das UE eine Direktzugriffskanal-, RACH-, Prozedur durchführt, wobei, wenn das UE beabsichtigt, auf die Zelle der Basisstation zuzugreifen, das zweite Signal dazu verwendet wird, dass die Basisstation annimmt, dass ein Bedarf zum Übertragen eines Synchronisationssignalblocks, SSB, und/oder einer Systeminformation besteht; und
wobei der Prozessor (11) dazu konfiguriert ist, anzunehmen, dass das UE dazu konfiguriert ist, von der Basisstation den SSB und/oder die Systeminformation zu empfangen, nachdem das UE das zweite Signal überträgt;
**dadurch gekennzeichnet, dass**:
nachdem das UE das zweite Signal überträgt, das UE annimmt, dass die Basisstation den SSB und/oder die Systeminformation in einem Zeitintervall überträgt, wobei ein Startort des Zeitintervalls in Bezug auf einen Ort eines übertragenen zweiten Signals oder einen Ort eines detektierten ersten Referenzsignals steht; und
das Zeitintervall ab dem nächsten 5-ms-Halbrahmen nach dem übertragenen zweiten Signal beginnt, und eine Dauer des Zeitintervalls ein Vielfaches von 5 ms ist.

12. Basisstation (20), umfassend:
einen Speicher (22);
einen Sendeempfänger (23); und
einen Prozessor (21), der mit dem Speicher (22) und dem Sendeempfänger (23) gekoppelt ist;
wobei der Sendeempfänger (23) dazu konfiguriert ist, ein erstes Signal an ein Benutzergerät, UE, zu übertragen, wobei das erste Signal dazu verwendet wird, dass das UE eine Zelle für den Zugang bestimmt, und das erste Signal ein erstes Referenzsignal und/oder ein zweites Referenzsignal umfasst;
wobei der Prozessor (21) dazu konfiguriert ist, ein zweites Signal zu detektieren, das von dem UE übertragen wird, bevor das UE angewiesen wird, eine Direktzugriffskanal-, RACH-, Prozedur durchzuführen, wobei, wenn das UE beabsichtigt, auf die Zelle der Basisstation zuzugreifen, das zweite Signal dazu verwendet wird, dass die Basisstation annimmt, dass ein Bedarf zum Übertragen eines Synchronisationssignalblocks, SSB, und/oder einer Systeminformation besteht; und
wobei der Sendeempfänger (23) dazu konfiguriert ist, den SSB und/oder die Systeminformation an das UE nach dem Detektieren des zweiten Signals zu übertragen;
**dadurch gekennzeichnet, dass**:
nachdem die Basisstation das zweite Signal detektiert, die Basisstation den SSB und/oder die Systeminformation in einem Zeitintervall überträgt, wobei ein Startort des Zeitintervalls in Bezug auf einen Ort eines übertragenen zweiten Signals oder einen Ort eines detektierten ersten Referenzsignals steht; und
das Zeitintervall ab dem nächsten 5-ms-Halbrahmen nach dem übertragenen zweiten Signal beginnt, und eine Dauer des Zeitintervalls ein Vielfaches von 5 ms ist.

## Revendications

1. Procédé de communication sans fil par un équipement utilisateur, UE, comprenant :
la détection (202), par l'UE, d'un premier signal transmis par une station de base, dans lequel le premier signal est utilisé pour que l'UE détermine une cellule pour l'accès, et le premier signal comprend un premier signal de référence et/ou un second signal de référence ;
la transmission (204), par l'UE, d'un second signal à la station de base avant d'effectuer une procédure de canal d'accès aléatoire, RACH, dans lequel si l'UE a l'intention d'accéder à la cellule de la station de base, le second signal est utilisé pour que la station de base suppose qu'il existe un besoin de transmettre un bloc de signal de synchronisation, SSB, et/ou une information système ; et
la supposition, par l'UE, que l'UE est configuré pour recevoir de la station de base le SSB et/ou l'information système après que l'UE transmet le second signal ;
**caractérisé en ce que** :
après que l'UE transmet le second signal, l'UE suppose que la station de base transmet le SSB et/ou l'information système dans un intervalle de temps, où un emplacement de début de l'intervalle de temps est en relation avec un emplacement d'un second signal transmis ou un emplacement d'un premier signal de référence détecté ; et
l'intervalle de temps commence à partir de la demi-trame de 5 ms suivante après le second signal transmis, et une durée de l'intervalle de temps est un multiple de 5 ms.

2. Procédé selon la revendication 1, dans lequel le premier signal est transmis par la station de base avec une première périodicité, et le SSB et/ou l'information système est transmis par la station de base avec une seconde périodicité, et la première périodicité est inférieure ou égale à la seconde périodicité.

3. Procédé selon la revendication 1, dans lequel le premier signal de référence correspond à un premier indice, et/ou le second signal de référence correspond à un second indice.

4. Procédé selon la revendication 1 ou 3, dans lequel le premier signal de référence et le second signal de référence ne se chevauchent pas dans le domaine temporel.

5. Procédé selon la revendication 3 ou 4, dans lequel le premier indice est en relation avec un premier indice SSB, et/ou le second indice est en relation avec un second indice SSB, dans lequel le premier signal de référence est quasi-colocalisé, QCL, avec un SSB associé au premier indice SSB, et/ou le second signal de référence est QCL avec un SSB associé au second indice SSB.

6. Procédé selon l'une quelconque des revendications 1 et 3 à 5, dans lequel le premier signal de référence et/ou le second signal de référence comprend un ou plusieurs symboles, et le ou les symboles comprennent un premier symbole et/ou un second symbole.

7. Procédé selon la revendication 6, dans lequel le premier symbole du premier signal de référence et/ou du second signal de référence a un emplacement prédéfini, et/ou l'emplacement prédéfini est en relation avec un emplacement de signal de synchronisation primaire, PSS, d'un SSB, dans lequel un emplacement du premier symbole du premier signal de référence est le même que l'emplacement PSS du SSB du premier indice SSB, et/ou un emplacement du premier symbole du second signal de référence est le même que l'emplacement PSS du SSB du second indice SSB.

8. Procédé selon la revendication 7, dans lequel le premier symbole et/ou le second symbole comprend un PSS.

9. Procédé selon l'une quelconque des revendications 1 à 8, dans lequel un emplacement du second signal est déterminé sur la base du premier signal ou de l'indice du premier signal, ou l'emplacement du second signal est prédéfini.

10. Procédé de communication sans fil par une station de base, comprenant :
la transmission (302), par la station de base, d'un premier signal à un équipement utilisateur, UE, dans lequel le premier signal est utilisé pour que l'UE détermine une cellule pour l'accès, et le premier signal comprend un premier signal de référence et/ou un second signal de référence ;
la détection (304), par la station de base, d'un second signal transmis par l'UE avant de commander à l'UE d'effectuer une procédure de canal d'accès aléatoire, RACH, dans lequel si l'UE a l'intention d'accéder à la cellule de la station de base, le second signal est utilisé pour que la station de base suppose qu'il existe un besoin de transmettre un bloc de signal de synchronisation, SSB, et/ou une information système ; et
la transmission, par la station de base, du SSB et/ou de l'information système à l'UE après avoir détecté le second signal ;
**caractérisé en ce que** :
après que la station de base détecte le second signal, la station de base transmet le SSB et/ou l'information système dans un intervalle de temps, où un emplacement de début de l'intervalle de temps est en relation avec un emplacement d'un second signal transmis ou un emplacement d'un premier signal de référence détecté ; et
l'intervalle de temps commence à partir de la demi-trame de 5 ms suivante après le second signal transmis, et une durée de l'intervalle de temps est un multiple de 5 ms.

11. Équipement utilisateur, UE (10), comprenant :
une mémoire (12) ;
un émetteur-récepteur (13) ; et
un processeur (11) couplé à la mémoire (12) et à l'émetteur-récepteur (13) ;
dans lequel le processeur (11) est configuré pour détecter un premier signal transmis par une station de base, dans lequel le premier signal est utilisé pour que l'UE détermine une cellule pour l'accès, et le premier signal comprend un premier signal de référence et/ou un second signal de référence ;
dans lequel l'émetteur-récepteur (13) est configuré pour transmettre un second signal à la station de base avant que l'UE effectue une procédure de canal d'accès aléatoire, RACH, dans lequel si l'UE a l'intention d'accéder à la cellule de la station de base, le second signal est utilisé pour que la station de base suppose qu'il existe un besoin de transmettre un bloc de signal de synchronisation, SSB, et/ou une information système ; et
dans lequel le processeur (11) est configuré pour supposer que l'UE est configuré pour recevoir de la station de base le SSB et/ou l'information système après que l'UE transmet le second signal ;
**caractérisé en ce que** :
après que l'UE transmet le second signal, l'UE suppose que la station de base transmet le SSB et/ou l'information système dans un intervalle de temps, où un emplacement de début de l'intervalle de temps est en relation avec un emplacement d'un second signal transmis ou un emplacement d'un premier signal de référence détecté ; et
l'intervalle de temps commence à partir de la demi-trame de 5 ms suivante après le second signal transmis, et une durée de l'intervalle de temps est un multiple de 5 ms.

12. Station de base (20), comprenant :
une mémoire (22) ;
un émetteur-récepteur (23) ; et
un processeur (21) couplé à la mémoire (22) et à l'émetteur-récepteur (23) ;
dans lequel l'émetteur-récepteur (23) est configuré pour transmettre un premier signal à un équipement utilisateur, UE, dans lequel le premier signal est utilisé pour que l'UE détermine une cellule pour l'accès, et le premier signal comprend un premier signal de référence et/ou un second signal de référence ;
dans lequel le processeur (21) est configuré pour détecter un second signal transmis par l'UE avant de commander à l'UE d'effectuer une procédure de canal d'accès aléatoire, RACH, dans lequel si l'UE a l'intention d'accéder à la cellule de la station de base, le second signal est utilisé pour que la station de base suppose qu'il existe un besoin de transmettre un bloc de signal de synchronisation, SSB, et/ou une information système ; et
dans lequel l'émetteur-récepteur (23) est configuré pour transmettre le SSB et/ou l'information système à l'UE après avoir détecté le second signal ;
**caractérisé en ce que** :
après que la station de base détecte le second signal, la station de base transmet le SSB et/ou l'information système dans un intervalle de temps, où un emplacement de début de l'intervalle de temps est en relation avec un emplacement d'un second signal transmis ou un emplacement d'un premier signal de référence détecté ; et
l'intervalle de temps commence à partir de la demi-trame de 5 ms suivante après le second signal transmis, et une durée de l'intervalle de temps est un multiple de 5 ms.
